# EUROPEAN PATENT APPLICATION

(11) **EP 4 629 463 A1**
(43) Date of publication of application: **08.10.2025**
(21) Application number: 24315117.2
(22) Date of filing: 03.04.2024
(51) Int. Cl.: H02J 3/00, F24H 7/00, G05D 23/19

(54) **SOURCE OF THERMAL ENERGY**

(71) Applicant: TotalEnergies OneTech, 92400 Courbevoie (FR)
(72) Inventor: HAVIL, Patrick, 92400 Courbevoie (FR); EVRARD, Adrien, 92400 Courbevoie (FR)
(74) Representative: Innovincia

(57) **Abstract**

Source of thermal energy for an industrial site, comprising:
- - an electrical power-to-heat system (1; 62),
- - a thermal energy storage system (3; 61) that can be heated by the power-to-heat system
- - an energy management system (19) capable of controlling the electrical power-to-heat system (1; 62) and capable of predicting the price of electricity, so that the energy management system (1; 62) adjusts the electricity consumption of the electrical power-to-heat system, when appropriate, in accordance with the predicted cost of electricity.

## Description

### Technical field

The technical field of the invention is industrial sites and their thermal energy sources.

### State of the art

An industrial site consumes a lot of energy in various forms.

Many sites consume thermal energy, i.e. energy that is transferred in the industrial process between a body at temperature T1 and a body at temperature T2, which is lower than T1.

Apart from geothermal energy, thermal energy is produced as secondary energy by transforming primary energy, which can be derived from fuels, wind, solar radiation, biomass, tidal energy or the potential energy of a river. These energies fall into two broad categories: fossil fuels on the one hand and renewable energies on the other.

An example of mostly used fossil fuel is natural gas.

The energy market is heavily weighted towards fossil fuels, which, all other things being equal, remain cheaper than the others.

### Technical problem to be solved

The carbon dioxide emissions associated with the use of fossil fuels make them undesirable in the long term. Solutions are therefore being sought to promote renewable energy.

To reduce carbon emission, the main solution is to use renewable electricity or low carbon electricity to produce heat with an electric heater or electric boiler. However, using renewable electricity raises challenges such as the intermittency of renewable electricity. In addition, simple substitution is too expensive for an industrial site. Where fossil fuels are available, they are often the most economical.

However, decarbonizing industry is a major challenge to achieving long-term carbon neutrality, and electrification through the integration of renewables can play a key role in achieving this.

### Disclosure of the invention

An object of the invention is a **source of thermal energy** for a consumption site, comprising:
- an electrical power-to-heat system,
- a thermal energy storage system that can be heated by the power-to-heat system,
- an energy management system capable of controlling the electrical power-to-heat system and capable of predicting the price of electricity, so that the energy management system adjusts the electricity consumption of the electrical power-to-heat system, when appropriate, in accordance with the predicted cost of electricity.

According to the invention, the consumption site can be an industrial site or a residential site.

In the present description, the following terms are used with the following meanings:
- "Flexibility request" means that, over a given time, there is a request to meet a flexibility need with the help of the at least one adjustment mechanism.
- "Flexibility schedule" means a plan of available power at different times of the day. A table usually expresses it. For example, an elementary flexibility schedule table may comprise only a starting date (date means day and time), an ending date and a power value. The flexibility schedule may comprise several slots, each slot may cover a period when the load is shed or even increased, by dispatching orders to the electrical power-to-heat system, possibly in combination with activating at least one adjustment mechanism.
- "Adjustment mechanism" is either one of the following actions that can be activated to serve the flexibility schedule:
   - a purchase or sale on an energy market, such as Block Exchange Notification of Demand Response ("NEBEF") in France, or
   - a contract change, such as a contract pricing option, or
   - a technical change, such as a frequency adjustment or smart peaking.
- "Agent" is a person requesting the flexibility need, also named the requester, but it can also be a market. In this last case, the system of the invention is used to bid in response to market demand.
- "Sensible energy storage system": the sensible heat storage is a thermodynamic process according to which heat is defined as the heat absorbed or released when a substance just undergoes a change in temperature. It uses liquids such as water, thermal oils, or solids such as molten salts, iron, rock, high-temperature concrete and bricks of refractory ceramic. Oils can reach up to about 350°C. Molten salts up to 800°C. Refractory ceramic up to 1000°C. The volumes required for solids are greater than for liquid media.
- "Latent energy storage .system": aims to exploit the latent heat released (or absorbed) during the phase change of a material. The material used will change from a solid to a liquid state, thus absorbing a large amount of thermal energy. It will then be able to release this heat in the reverse transition phase when it solidifies. The energy required to change the phase of a material from solid to liquid is called the "enthalpy of fusion". To achieve this, specific materials (with the highest melting enthalpy) called "Phase Change Materials" (PCMs) are used. The main PCMs used in large systems are paraffins, fatty acids and hydrated salts.
- "Chemical thermal energy storage system": includes sorption and thermochemical reactions. Energy is stored after a dissociation reaction and then recovered in a chemically reverse reaction.

### Advantageous Effects of Invention

One advantage of the source of thermal energy is its ability to store excess thermal energy generated during off-peak or low-demand periods and release it during peak demand times. This reduces the need for continuous energy production and can lead to cost savings.

Thermal storage complements renewable energy sources like solar and wind, which are intermittent by nature. Excess energy generated during sunny or windy periods can be stored as thermal energy and used when renewable energy generation is low, enhancing the reliability of renewable energy systems.

It allows for the shifting of energy consumption from high-demand periods to low-demand periods. This can reduce the strain on the grid during peak hours and help avoid costly energy infrastructure upgrades.

By providing flexibility during peak period, thermal storage systems contribute to grid stability. They can respond quickly to fluctuations in energy supply and demand, helping to prevent blackouts and brownouts.

Moreover, the energy management system accurately predicts future electricity prices and can help the site to make informed decisions regarding energy consumption. The site can choose to reduce electric consumption during peak rate periods and increase it during off-peak times, therefore lowering electricity costs.

Other advantages are also provided by the invention:
Budget Planning: the energy management system allows for better budget planning by providing insights into expected energy expenses. This enables businesses to allocate resources more effectively and avoid unexpected spikes in electricity bills.
Energy Procurement: businesses that purchase electricity on the open market can optimize their procurement strategies. They can buy energy when prices are low and avoid purchasing during high-cost periods, potentially resulting in significant savings.
Renewable Energy Integration: for organizations with renewable energy sources like solar panels, the energy management system can help decide when to use or store excess energy based on expected price fluctuations. This maximises the value of renewable generation and keep the CO2 emissions as low as possible.
Demand Response: the energy management system can participate in demand response programs by automatically adjusting energy consumption in response to grid conditions and price signals. This can lead to financial incentives for participating organizations.
Real-time Monitoring: if the energy management system offers real-time monitoring and alerts, users are enabled to respond quickly to unexpected price changes or grid events, further enhancing cost savings.
Competitive Advantage: organizations that effectively manage their energy costs through the energy management system may gain a competitive advantage by offering more competitive prices for their products or services.
Data-Driven Insights: the data collected and analysed by the energy management system can provide valuable insights into energy consumption patterns, helping organizations make long-term energy efficiency improvements.

### Embodiments

According to a particular embodiment of the invention, the energy management system also controls the thermal energy storage system. Hence, the discharge of the thermal energy storage system can be controlled consistently with the operation of the electrical power-to-heat system.

According to a particular embodiment of the invention, the energy management system can be monitored remotely. Thus, a final decision making by a responsible person can be done in a location far away from the consumption site. For instance, a specialized department of a company can manage the energy contracts for all the plants. Monitoring the energy management system remotely helps managing the energy storage centrally for a better optimization of the costs.

According to a particular embodiment of the invention, the electrical power-to-heat system comprises a heat pump. This option is advantageous for a better efficiency of the whole system, because of its better performance.

According to a particular embodiment of the invention, a heat-to-power system is also comprised in the source of thermal energy, for instance a turbine. Hence, electricity can be produced and sent back to the grid from stored and disposable thermal power accumulated in the thermal energy storage system.

According to a particular embodiment of the invention, a heat transfer fluid such as water, air, CO₂, thermal oil, argon, helium, is used to convey thermal energy.

According to a particular embodiment of the invention, the thermal energy storage system is over 1MWh capacity.

According to a particular embodiment of the invention, the thermal storage system is a sensible storage system. This technology is the simplest and the most widespread. It consists of heating a liquid or solid material, without it changing phase (melting, vaporization, etc.).

According to another embodiment, the thermal storage system is a latent storage system which will change from a solid to a liquid state or the contrary.

According to a particular embodiment of the invention, the thermal storage system is a chemical thermal energy storage system.

According to another embodiment, the thermal storage combines at least two of a sensible energy storage system, a latent energy storage system, and a chemical energy storage system. The thermal storage system can be one or many thermically insulated systems containing one or more transfer fluid.

According to another embodiment, the energy management system comprises a dispatch engine able to control the electrical power-to-heat system and, when appropriate, the thermal energy storage system, according to a flexibility schedule, a booking engine, a forecasting engine, all connected for exchanging data, and the booking engine comprises a computer-readable medium with instructions encoded thereon and processors connected to the medium and configured to, when executing the instructions, perform operations of:
- interfacing with an agent,
- receiving and storing a flexibility request provided by the agent,
- checking the feasibility of the stored flexibility request with a flexibility schedule received from the forecast engine,
- in case of feasibility, triggering the controlling of the electrical power-to-heat system and, when appropriate, the thermal energy storage system, by the dispatch engine according to the flexibility schedule,
- otherwise, declining the flexibility request
and the forecast engine comprises storage means for storing a set of different subsets of computer-program codes implementing different subsets of algorithms, each subset of algorithms being adapted to at least one specific adjustment mechanism, a computer-readable medium with instructions encoded thereon and processors connected to the medium and configured to, when executing the instructions, perform operations of:
- receiving a flexibility request from the booking engine, associated with at least one adjustment mechanism,
- selecting a subset of algorithms adapted to the at least one adjustment mechanism associated with the flexibility request, reading the subset of computer-program codes and implementing said selected subset of algorithms in said storage means,
- loading said subset of computer-program codes in the computer-readable medium,
- running the loaded subset of computer-program codes,
- delivering to the booking engine a flexibility schedule adapted to the flexibility request.

According to a particular embodiment of the invention, the booking engine is configured to carry out any one or several of these actions:
- send flexibility forecasts to the agent,
- allow the agent to ask to stop the flexibility commands on the electrical power-to-heat system urgently,
- allow the agent to bid/nominate the electrical power-to-heat system on relevant markets.

According to the invention, the forecast engine operates depending on available adjustment mechanisms.

Adjustment mechanisms can be selected among the list consisting of a type of energy market, a type of contract pricing, a type of technical change such as a frequency adjustment.

An example of a subset of algorithms comprises four algorithms:
1. An algorithm for assessing the energy need of users of a specific type of electrical power-to-heat system.
2. An algorithm for predicting the consumption of said users on a timeline.
3. An algorithm for predicting the available adjustment mechanisms when considering constraints set by said users.
4. An algorithm for predicting the expected earnings that would result from activating the thus made available adjustment mechanisms.

According to a particular embodiment of the invention, the set of algorithms is a library organized so as to gather the algorithms in subsets each dedicated to at least one adjustment mechanism.

According to a particular embodiment of the invention, a decision tree filters out the subsets of algorithms based on tags used as selection criteria.

Tags can also be used to manage the algorithms as a criterion to filter out algorithms depending on their version.

Tags can also be put on asset types and contracts. For instance, if the requester has signed a contract with the flexibility manager, the contract ID can be used as a tag.

According to a particular embodiment of the invention, the forecast engine is configured to take into account anyone or several of these parameters:
- market constraints,
- unexpected events, such as maintenance, failures, accidents,
- risk predefined as acceptable by the agent,
- frequency, timestep and horizon of the forecasts can be customized.

According to a particular embodiment of the invention, algorithms can improve and auto-define new subsets of algorithms.

According to a particular embodiment of the invention, successive versions of the algorithms are stored for later use.

According to a particular embodiment of the invention, an instant report is sent back to the booking engine to help discuss with the agent.

The instant report helps the agent with its flexibility activation strategy. The need is analyzed and discussed, and the gain can be increased by helping the agent review his request. The agent may not possess as much information as the manager of the electrical power-to-heat system, such as market prices, fines, and so. Taking benefit from such knowledge may generate more profit than the a priori request of the agent.

According to a particular embodiment of the invention, several power-to-heat devices are aggregated into one electrical power-to-heat system.

According to a particular embodiment of the invention, several thermal energy storage devices are aggregated into one thermal energy storage system.

In this text, aggregated means several devices are brought together to reach a critical power, for instance, more than 100 kW. Aggregated devices behave like one electrical system.

One advantage is the ability to dispatch the flexibility to an electrical power-to-heat system, or a subpart of it made of one or several electrical power-to-heat devices, provides the advantage of taking into account that some of the controlled power-to-heat devices have setpoints, possibly in another physical unit than Watts or Volts. For instance, electrical heaters are usually set at Celsius degrees. Then, a model for conversion can be part of the configuration of the dispatch engine. Another advantage is optimizing the electrical power-to-heat system by verifying that the expected power is generated. The dispatch engine gathers all the information enabling the power gain check. If all the power-to-heat devices have reacted as expected, the check is positive. If some power-to-heat devices show latency or failure, the delay or failure information is returned to the booking engine. Then, either the delay or failure is overcome, unsolicited electrical power-to-heat devices are involved in replacing the defective ones, or the following availability schedule is adjusted to consider this new data.

According to a particular embodiment of the invention, it comprises a database containing data used by the forecast engine.

According to a particular embodiment of the invention, the database is structured so as to store resources' metadata, such as the hierarchy between devices.

According to a particular embodiment of the invention, the database is structured so as to store flexibility constraints such as activation time, delay, maximum tolerated activation, and activation costs.

According to a particular embodiment of the invention, the database is structured so as to store dynamic states such as communication status, telemetries, time series, and consumption site's needs.

According to a particular embodiment of the invention, the database is structured so as to store consumption site-expressed constraints such as heating schedule, and request constraints retrieved through tailored means.

Consumption site-expressed constraints can be collected through apps, such as APIs, which stands for application programming interfaces, or HCI which stands for human-computer interaction. Any other input means can be used.

According to a particular embodiment of the invention, the database is structured so as to store unexpected events, such as electricity cuts or information system-related incidents.

According to a particular embodiment of the invention, the database is structured so as to store technical, functional, contractual and/or regulatory constraints.

According to a particular embodiment of the invention, the database is structured so as to store weather forecasts.

According to a particular embodiment of the invention, the database is structured so as to store market prices.

According to a particular embodiment of the invention, the database is structured so as to store the CO2 content of the power generated or saved by the electrical power-to-heat system and the thermal energy storage system.

According to a particular embodiment of the invention, it comprises a reporting module configured to carry out any one or several of these actions:
- gather all the required data from various other in-house software and databases and produce various aggregated outputs as needed;
- allow retroaction on flexibility commands.

### Other objects

Another object of the invention is a **method for managing an electrical power-to-heat system** as described above, characterized in that it comprises five steps, from the prediction of available flexibilities upstream of the day of flexibility to post-clearance feedback.

Possible pre-studies may have previously taken place on the statistical behavior of the consumption site.

Then, in a first step, taking place several days before the intended flexibility day:
Using historical consumption data and external flows, such as weather, calendar, data from statistics bureaus, the probability distribution of the consumption of thermal energy is estimated. The consumption site's constraints at the required time are taken into consideration.

Then, the appropriate subset of algorithms, adapted to the available adjustment mechanisms, is selected. Performance of these algorithms allows to estimate the probability distribution of each available network service, considering the constraints associated to the network service in a portfolio and predicted consumption, the technical constraints of the electrical power-to-heat system, the regulatory constraints of the mechanism(s), and the constraints of the consumption site.

in a second step, depending on the risk and business criteria (maximum number of slots, slot duration, tolerated risk of overestimation of load shedding, etc.) specified by the agent, various load shedding slots, or, conversely, slots for on-site generation of electricity, are offered by the subset of algorithms, comparing the potential gains on the various targeted markets/ adjustment mechanisms.

Algorithms of the selected subset are also able to estimate the quality of the predictions. Then, the agent is also transparently shown a risk assessment that the proposed slots may be difficult to achieve on the intended flexibility day, based on recent variations in the behavior of assets in relation to history, their abnormal unavailability, unusual weather forecasts, etc.

in a third step, once the agent has decided to activate the offered flexibility schedule, partially or entirely, or possibly slightly altered, the booking takes place.

If the flexibility need requires that an adjustment mechanism be activated in relation with an energy market, the order is sent to the market. In this case, market results are fed back.

In a fourth step, the flexibility schedule is executed. The plan is converted into orders to the electrical power-to-heat system, sent at the proper time by the dispatch engine.

A monitoring takes places while ordering the electrical power-to-heat system, to enable feedback and making corrections on the fly if some electrical power-to-heat devices became unable to respond.

In a fifth step, taking place after the flexibility day, the actual load shedding or load increase is accurately computed from the perspective of the market operator, i.e., after monitoring actual values, different from the values measured on the assets themselves. KPIs relating to load flexibility, and comparison between the planned schedule, the orders sent, the values actually measured on the electrical power-to-heat system and, where applicable, control of the regulatory achievement, are presented to the agent. Then, business KPIs showing the impact on the consumption site, financial gains, observed unavailability of electrical power-to-heat system are presented to the agent.

In the preceding lines, the control of the electrical power-to-heat system can be extended, when appropriate, to the simultaneous control of the thermal energy storage system.

Another object of the invention is a **consumption site,** i.e. an industrial site or a residential site, comprising a source of thermal energy as described above.

### Brief description of the figures

The invention will be better understood by reading the description of the following non-limiting examples, illustrated by the following figures:
- figure 1 is a schematic representation of a source of thermal energy according to one embodiment of the invention,
- figure 2 is a diagram of an energy management system according to the invention,
- figure 3 is a block diagram of the steps carried out by the booking engine 14,
- figure 4 is a block diagram of the steps carried out by the forecast engine 15,
- figure 5 shows an example of a subset 26 of computer-program codes 27 with their associated types of flexibility requests,
- figure 6 is a schematic representation of a consumption site according to one embodiment of the invention,
- figure 7 is a graph showing the off-peak charging,
- figure 8 is a graph showing two examples of network services.

### Description of at least one way of carrying out the invention

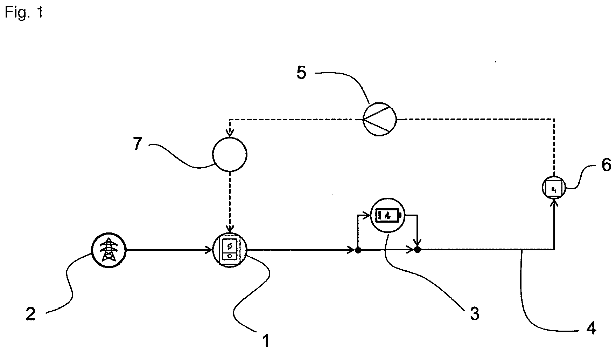

The general configuration of a source of thermal energy is shown in Figure 1. It comprises a heat pump 1 representing a power-to-heat system, connected to a grid 2. The heat pump 1 takes electrical energy from the grid 2. The grid 2 can be a regional or a local electrical network. The heat pump 1 is connected to a thermal energy storage system embodied by a sensible energy storage system 3 using bricks of refractory ceramic. Exchanges between the heat pump 1 and the thermal energy storage 3 are carried out by mass flows, embodied by a heat transfer fluid in a loop circuit 4. The loop goes through a pump 5, a heat-exchanger 6 and an expansion vessel 7.

Heat exchanger 6 is a heat consumer, for instance a plant. At the output of the heat consumer, residual thermal energy can be available. This residual energy is sent back to heat pump 1 through the heat transfer fluid.

When possible, in an alternative embodiment not shown, heat can be converted into electrical current by a turbine and current can be sent back to the grid 2.

The consumption of electricity is managed by an energy management system that can control the operation of heat pump 1 and energy storage system 3. Thermal energy can be provided to plant 6 either by heat pump 1, or by energy storage system 3, or by both.

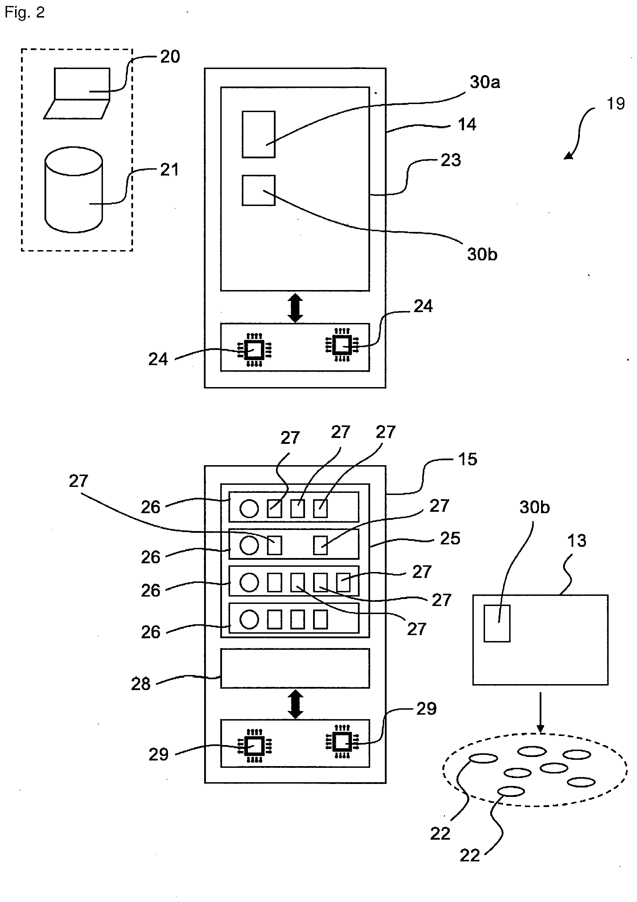

Figure 2 represents the internal components of an energy management system 19 that can be used to manage the electrical power-to-heat system and the thermal energy storage system of Figure 1.

A personal computer 20 and a server 21, are intended to be used by an agent, a human being responsible for the purchase of energy on the site hosting the thermal energy storage. The agent can also be a machine.

A broken line circles several bubbles 22. They represent electrical power-to-heat devices and thermal energy storage devices gathered in a portfolio. Here, the portfolio contains seven of them, but it may contain one thermal energy storage device only and one electrical power-to-heat device only, as the heat pump and thermal energy storage of Figure 1.

The energy management system comprises a booking engine 14, a forecast engine 15 and a dispatch engine 13.

The booking engine 14 comprises a booking computer-readable medium 23. Instructions are encoded on the booking computer-readable medium 23.

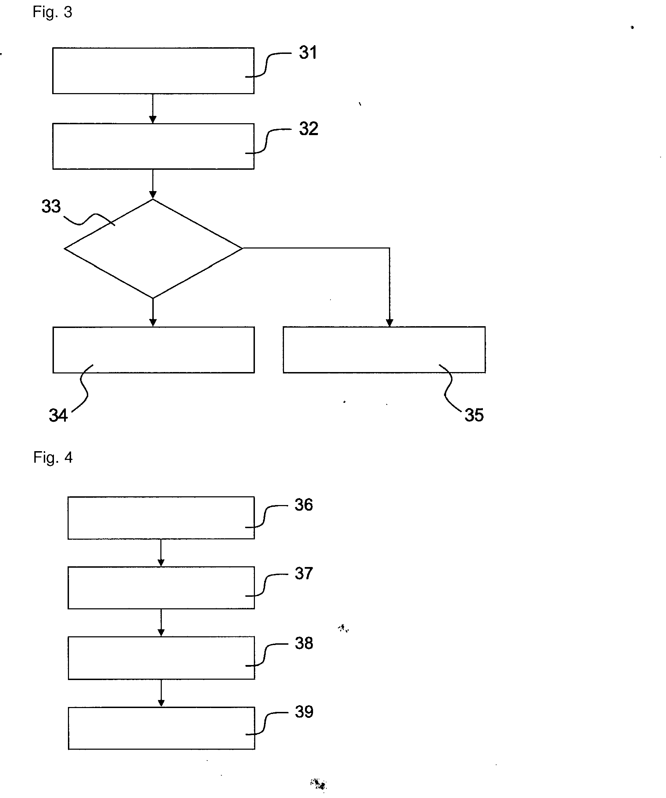

The booking engine 14 also comprises booking processors 24 connected to the booking computer-readable medium 23. The instructions, when executed by the processes, perform operations illustrated in figure 3:
- 31: interfacing with an agent,
- 32: receiving and storing a flexibility request 30a provided by the agent,
- 33: checking the stored flexibility with a flexibility schedule 30b received from the forecast engine 15,
- 34: in case of feasibility, triggering the controlling of the electrical power-to-heat system and thermal energy storage system by the dispatch engine 13 according to the flexibility schedule 30b,
- 35: otherwise, declining the flexibility request.

To that purpose, the forecast engine 15 comprises storage means 25 for storing a set of different subsets 26 of computer-program codes 27. Each one of the computer-program codes 27 implements several subsets of algorithms. Moreover, each subset of algorithms is adapted to a specific type of flexibility request.

The forecast engine 15 also comprises a forecast computer-readable medium 28. The forecast computer-readable medium 28 has instructions included thereon. The forecast engine 15 also comprises forecast processors 29 connected to the forecast computer-readable medium 28 and configured to, when executing the instructions, perform operations illustrated in figure 4:
- 36: receiving a flexibility request 30a from the booking engine 14,
- 37: selecting a subset of algorithms adapted to the type of flexibility request 30a and reading the subset 26 of computer-program codes 27 implementing a set selected subset of algorithms in said storage means 25,
- 38: loading a subset 26 of computer-program codes 27 in the computer-readable medium 28 and running the loaded subset 26 of computer-program codes 27,
- 39: delivering to the booking engine 14 a flexibility schedule 30b adapted to the flexibility request 30a.

In figure 3, the steps carried out by the booking engine 14 are represented by blocks:
- interfacing step 31: the booking engine 14 exchanges data with the computer 20 of the agent. During this step, the booking engine 14 is interfacing with the agent to help the agent decide which request is the most beneficial to the grid,
- booking reception step 32: the booking engine 14 receives an appropriate flexibility request 30a from the agent. The booking engine 14 stores the flexibility request in the booking computer-readable medium 23,
- checking step 33: the booking engine 14 checks the feasibility of the stored flexibility request with a flexibility schedule 30b received from the forecast engine 15. Suppose the flexibility request 30a qualifies compared to the flexibility schedule 30b at triggering step 34. In that case, the booking engine 14 triggers the controlling of the electrical power-to-heat system and thermal energy storage system by the dispatch engine 13 according to the flexibility schedule 30b.
- declination step 35: otherwise, the booking engine 14 declines the flexibility request 30a.

in figure 4, the steps carried out by the forecast engine 15 are represented by blocks:
- forecast reception step 36: the forecast engine 15 receives the flexibility request 30a from the booking engine 14,
- forecast selection step 37: to better perform the flexibility request treatment, the forecast engine 15 selects a subset of computer-program code, adapted to the type of flexibility request 30a, from the set of available subsets 26 of computer-program codes 27 stored in the storage means 25,
- loading step 38: the forecast engine 15 loads said subset 26 of computer-program codes 27 in the forecast computer-readable medium 28, and runs the loaded subset 26 of computer-program codes 27,
- delivery step 39: the forecast engine 15 delivers to the booking engine 14 the flexibility schedule 30b adapted to the flexibility request 30a, enabling the booking engine 14 to qualify or decline the flexibility request 30a.

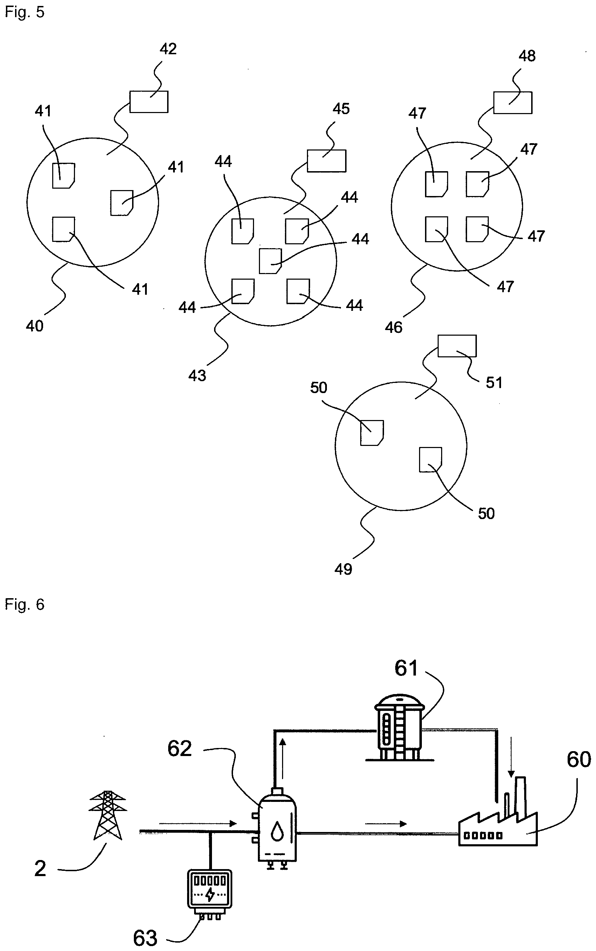

Figure 5 shows four examples of subsets 26 of computer programs that the invention can handle to manage several types of flexibility request:
- instance_a subset 40 contains three computer programs 41 that can deliver a flexible schedule on a specific market. In addition, an instance_a tag 42 is attached to the subset to make it selectable if a flexibility request of such a type is expressed.
- instance_b subset 43 contains five computer programs 44 that can deliver a flexibility schedule for reducing the imbalance settlement price. An instance_b tag 45 is attached to the subset to make it selectable in case a flexibility request of such a type is expressed.
- instance_c subset 46 contains four computer programs 47 that can deliver a flexibility schedule limiting the asset management to a predetermined type of assets. An instance_c tag 48 is attached to the subset to make it selectable in case a flexibility request of such a type is expressed.
- instance_d subset 49 contains two computer programs 50 that can limit the request to predetermined steering of predetermined electrical power-to-heat devices and thermal energy storage devices, such as the only one electrical power-to-heat system and the only one thermal energy storage system of Figure 1. An instance_d tag 51 is attached to the subset to make it selectable in case a flexibility request of such a type is expressed.

Possible requests are classified and stored in advance associated with the contract ID signed by the agent.

Only requests the type of which is known and predefined are accepted and can be considered. Last-minute requests are not allowed unless for an urgent stop.

Figure 6 exemplifies the operation of a source of thermal energy according to the invention, in the context of a consumption site which is an industrial site, connected to a grid 2.

The industrial site comprises a plant 60 that consumes thermal energy for operating. The thermal energy is provided either by a thermal energy storage system 61 or by an electric heater 62 which is an electrical power-to-heat system.

In this example, the thermal energy storage system 61 is a sensible energy storage system.

The electric heater 62 is used either to feed the plant 60 when heat is needed in addition to heat provided by the discharging thermal energy storage 61 or not, or to charge the thermal energy storage 61.

Energy taken from the grid 2 is metered by a meter 63 at the entrance of the site.

The method of operating the thermal energy storage can be summarized in three steps:
1) Flexibility asset declaration: the agent, responsible person for electrical power purchasing on the industrial site, considers the thermal energy storage should be available for some flexibility. The agent makes declarations to platforms registering available assets connected to the grid. Many platforms can be used. For instance, on the French market, the SIKAPA platform should be used for sites connected to the part of the grid managed by Enedis. TotalEnergies Flexible Power Solution is another platform that can help industrial or residential sites to make use of their ability to offer flexibility.
2) Metering energy data: a database containing data, namely the consumption site's needs and consumption site's constraints such as a heating schedule, is used by the forecast engine 15 to deliver flexibility volume forecasts. The forecasts are offered on the market with a flexibility schedule 30b.
3) When a market selects the offer, or when a demand response of the market fits the offer, the flexibility is booked and the flexibility schedule 30b is sent to the dispatch engine 13, for management of the thermal energy storage.

In the example shown, if the plant consumes the equivalent of 2,500 MWth of gas per year, the plant emits 636 tCO2/year.

Thanks to the thermal energy storage associated with an electric heater managed according to the invention, savings can be drastic.

With a storage sized at 10MWth and the electric heater at 1.5Mwe, the electrical management system will lower the CO2 emission to 99 tCO2/year, i.e. a saving of 535 tCO2/year.

In addition, the flexibility management helps stabilize the grid when there are peaks in production or consumption. This grid stabilization is accompanied by revenues. As previously disclosed, the monetization can be based on two elements: off-peak charging and network services.

"Network services" means various market mechanisms that aim to balance supply and demand in real time. Market mechanisms can take benefit of flexibilities of production, storage, and consumption resources to be exploited and remunerated. In the electricity system, the electric power injected must be equal to the electric power withdrawn at any given time. Network services aim to balance supply and demand in real time, and to ensure that generation capacity is matched to demand in the long term. In this text, network services are various market mechanisms that allow the flexibility of production, storage and consumption resources to be used and remunerated. The primary objective of these services is to ensure that the use of the network is optimized.

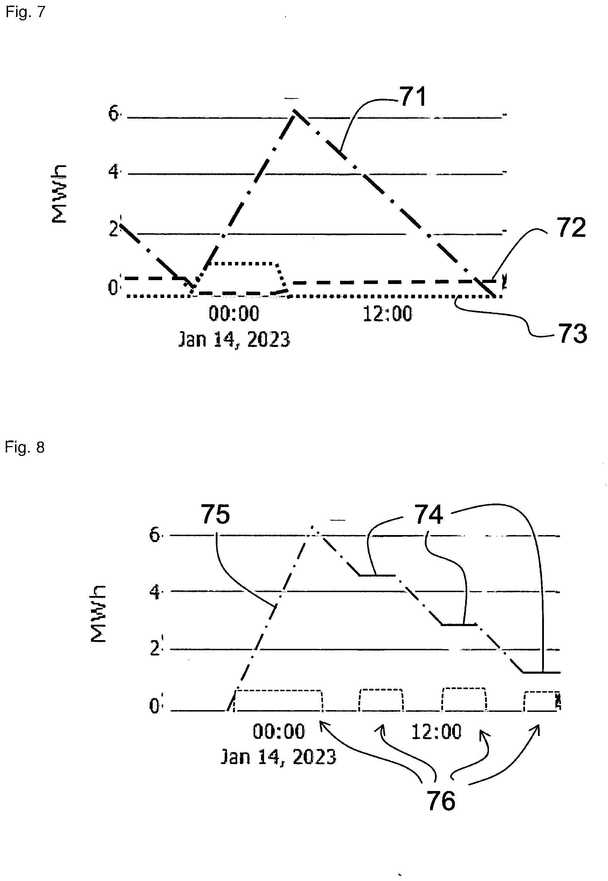

Off-peak consumption is shown in Figure 7, when one can see alternating ascents and descents corresponding to charging phases and discharging phases of the thermal energy storage 61. The state of charge 71, the discharge 72 and the charge 73 graphs are shown on figure 7.

During a charging phase 71, the thermal energy storage increases its state of charge, while stopping the discharge toward the plant.

Network services are shown in Figure 8 and six examples are given in the following table.

**[Table 1]**

| | SPOT Market (NEBEF) | BALANCING MECHANISM (RR) | CAPACITY MECHANISM | Ancillary Services | | mFRR |
|---|---|---|---|---|---|---|
| | | | | FCR | aFRR | |
| Product | Hourly Energy (Pay as clear) | Half-hourly Energy (Pay-as-Bid) | Available Capacity (Pay as bid) | Capacity (Pay as clear) | Capacity + Energy (Regulated - Pay as clear (2024)) | Capacity (Pay as clear + Energy on MA) |
| Submission Deadline | D-1 | D-1 & Up to H-1 | Y-1 | D-1 | D-1 | Y-1 & D-1 |
| Availability | Any / No constraint | Any / No constraint | 7h-15h et 18h-20h | 4h Auction | 30 min auction | 4h blocks (RR) & 24h (RC) |
| Activation duration | At least 1 hour | At least 30 min | Min = 30 min | Min: 15 min | Min :30 min | Min:30 min/ Max: 2h (RR) /1h30 (RC) |
| | | | Max = 10 h | Max: 1h | No max | |
| Activation Time | No restriction | No restriction | No restriction | < 15s | < 400s | <13min (RR) or <30 min (RC) |
| Max number of Activations | Any | Any | 15 à 25 days / year (PP1/PP2) | No Max | No Max | Max = 4 activations max/day |
| Contraints | Min 100 kW | M1n 1 MW | NEBEF or MA | Min :1 MW | Min: 1 MW | Min 10 MW (Y Auction) Min 1 MW (Daily if already selected in Y) |
| | | | | Symmetric product | Symmetric product | |

During a charging or discharging period, the thermal energy storage can answer a demand response by activating a flexibility schedule. During demand response periods 74, the state of charge 75 of the thermal energy storage varies up or down depending on the type of flexibility needed by the grid. The electric heater is triggered on appropriate time slots 76.

The invention is not limited to the disclosed embodiments.

### List of references

- 1: Heat pump
- 2: Grid
- 3: Sensible energy storage system
- 4: Loop circuit
- 5: Pump
- 6: Heat exchanger
- 7: Expansion vessel
- 13: Dispatch engine
- 14: Booking engine
- 15: Forecast engine
- 19: Energy management system
- 20: Personal computer
- 21: Server
- 22: Bubbles
- 23: Booking computer-readable medium
- 24: Booking processors
- 25: Storage means
- 26: Subset of computer-program codes
- 27: Computer-program codes
- 28: Forecast computer-readable medium
- 29: Forecast processors
- 30a: Flexibility request
- 30b: Flexibility schedule
- 31: Interfacing step
- 32: Booking reception step
- 33: Checking step
- 34: Triggering step
- 35: Declination step
- 36: Forecast reception step
- 37: Forecast selection step
- 38: Loading step
- 39: Delivery step
- 40: Instance_asubset
- 41: Three computer programs
- 42: Instance_a tag
- 43: Instance_b subset
- 44: Five computer programs
- 45: Instance_b tag
- 46: Instance_c subset
- 47: Four computer programs
- 48: Instance_c tag
- 49: Instance_d subset
- 50: Two computer programs
- 51: Instance_d tag
- 60: Plant
- 61: Latent energy storage system
- 62: Electric heater
- 63: Meter
- 71: State of charge
- 72: Discharge
- 73: Charge
- 74: Demand response period
- 75: State of charge of the thermal energy storage
- 76: Time slot of electric heater triggering

## Claims

1. **Source of thermal energy** for a consumption site, comprising:
- an electrical power-to-heat system (1; 62),
- a thermal energy storage system (3; 61) that can be heated by the power-to-heat system,
- an energy management system (19) capable of controlling the electrical power-to-heat system (1; 62) and capable of predicting the price of electricity, so that the energy management system adjusts the electricity consumption of the electrical power-to-heat system (1; 62), when appropriate, in accordance with the predicted cost of electricity.

2. Source of thermal energy according to claim 1, wherein the energy management system (19) also controls the thermal energy storage system (3; 61).

3. Source of thermal energy according to anyone of the preceding claims, wherein the energy management system (19) can be monitored remotely.

4. Source of thermal energy according to anyone of the preceding claims, wherein the electrical power-to-heat system comprises a heat pump (1).

5. Source of thermal energy according to anyone of the preceding claims, wherein a heat-to-power system is also comprised in the source of thermal energy.

6. Source of thermal energy according to anyone of the preceding claims, wherein a heat transfer fluid such as water, air, CO2, thermal oil, argon, helium, is used to convey thermal energy.

7. Source of thermal energy according to anyone of the preceding claims, wherein the thermal energy storage system is over 1MWh capacity.

8. Source of thermal energy according to anyone of the preceding claims, wherein the thermal energy storage system is a sensible energy storage system (3), or a latent energy storage system (61), or a chemical thermal energy storage system, or a combination of at least two of them.

9. Source of thermal energy according to anyone of the preceding claims, wherein the energy management system (19) comprises a dispatch engine (13) able to control the electrical power-to-heat system (1; 62) and, when appropriate, the thermal energy storage system (3; 61), according to a flexibility schedule, a booking engine (14), a forecasting engine (15), all connected for exchanging data, and the booking engine (14) comprises a computer-readable medium (23) with instructions encoded thereon and processors (24) connected to the medium and configured to, when executing the instructions, perform operations of:
- interfacing with an agent,
- receiving and storing a flexibility request (30a) provided by the agent,
- checking the feasibility of the stored flexibility request with a flexibility schedule (30b) received from the forecast engine (15),
- in case of feasibility, triggering the controlling of the electrical power-to-heat system (1; 62) and, when appropriate, the thermal energy storage system (3; 61), by the dispatch engine (13) according to the flexibility schedule (30b),
- otherwise, declining the flexibility request (30a)
and the forecast engine (15) comprises storage means (25) for storing a set of different subsets of computer-program codes (26) implementing different subsets of algorithms, each subset of algorithms being adapted to at least one specific adjustment mechanism, a computer-readable medium (28) with instructions encoded thereon and processors (29) connected to the medium and configured to, when executing the instructions, perform operations of:
- receiving a flexibility request (30a) from the booking engine, associated with at least one adjustment mechanism,
- selecting a subset of algorithms adapted to the at least one adjustment mechanism associated with the flexibility request (30a), reading the subset of computer-program codes (26) and implementing said selected subset of algorithms in said storage means (25),
- loading said subset of computer-program codes (26) in the computer-readable medium (28),
- running the loaded subset of computer-program codes (26),
- delivering to the booking engine (14) a flexibility schedule (30b) adapted to the flexibility request (30a).

10. **Consumption site** comprising a source of thermal energy according to anyone of the preceding claims.
